(19)

**Europäisches Patentamt**
**European Patent Office**
**Office européen des brevets**

(11)  **EP 2 505 996 A1**

(12)  **EUROPEAN PATENT APPLICATION**
published in accordance with Art. 153(4) EPC

(43) Date of publication:
**03.10.2012 Bulletin 2012/40**

(21) Application number: **10833646.2**

(22) Date of filing: **24.11.2010**

(51) Int Cl.:
*G01N 22/00* (2006.01)     *G06T 7/60* (2006.01)

(86) International application number:
**PCT/RU2010/000725**

(87) International publication number:
**WO 2011/065869 (03.06.2011 Gazette 2011/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.11.2009  RU 2009145045**

(71) Applicant: **"Applied Physics Science And Technology Center"**
**Company With Limited Responsibility**
**St. Petersburg 190013 (RU)**

(72) Inventors:
• **KUZNETSOV, Andrey Viktorovich**
**St.Petersburg 194223 (RU)**
• **GORSHKOV, Igor Yurievich**
**St.Petersburg 199178 (RU)**
• **AVERYANOV, Valery Petrovich**
**St.Petersburg 195221 (RU)**

(74) Representative: **Best, Michael**
**Lederer & Keller**
**Patentanwälte**
**Unsöldstrasse 2**
**80538 München (DE)**

(54)  **METHOD FOR REMOTELY INSPECTING A TARGET IN A MONITORED AREA**

(57)  Subject matter: the monitored area is irradiated with microwave radiation using two or more elementary microwave emitters. The signal reflected from the monitored area is recorded by one or more parallel recording channels, the recorded signal undergoes coherent processing to obtain the maximum intensity values of the reconstructed configuration of the scatterers in the monitored area in dependence on the distance from the elementary emitters to the target. The information obtained as a result of such processing is displayed by constructing a microwave image corresponding to a three dimensional surface. In addition, a video image of the target is obtained by using two or more video cameras which are synchronized with the microwave emitters, the resulting video image of the target is converted, and the three dimensional video image and the microwave image are converted into a general system of coordinates. The technical result is an increase in the reliability with which the presence or absence of dielectric objects is determined in a covert inspection.

**EP 2 505 996 A1**

**Description**

FIELD OF INVENTION

The invention belongs to the field of remote detection of concealed objects, particularly to methods of detection of dielectric explosive compounds concealed under the clothes on a human body.

BACKGROUND OF THE INVENTION

Among the security issues in present time the problem of detecting the so-called suicide bombs that are concealed on the body of a terrorist has a particular importance.

At present, mainly used methods for solving this task are based on the use of: metal detectors, vapor detectors, X-ray machines, police dogs, etc. In different countries methods of inspection of the human body are being developed, which are based on new physical principles: Nuclear Quadrupole Resonance (NQR), Raman backscattering, dielectric portals, passive and active terahertz range devices for human body inspection, passive millimeter range radars and active microwave portals.

The known methods do not provide a sufficient possibility for a remote and covert inspection, and therefore, do not allow a timely identification of the "suicide bomber" and taking measures to disarm him before he activates the explosive device. Another major drawback of existing methods is the lack of possibility to determine the degree of danger of the detected object automatically and a high rate of false alarms. This renders it impossible to use them under real conditions for inspection of a large number of people moving in a flow.

Hence, the task of detecting explosive devices carried by "suicide bombers" requires that the following specific requirements are met:

- remote inspection;
- automatic mode of inspection;
- detection of any types of objects (both dielectrics and conductors);
- implementation of the inspection in real-time;
- automatic determination the threat level of the detected object;
- possibility to perform a covert inspection;
- independence of the inspection on external conditions;
- safety for the human being;
- possibility to assign the signal of danger to a specific person;
- mobility of the system and relatively low cost.

There is a known method for detection of objects concealed under the clothes, not only the metallic but also the non-metallic ones, for instance, of explosives concealed under the clothes. By using a receiving antenna focused on a small area of the human body, electromagnetic waves emitted by this area are received. Subsequently, by using a radiometer and a processing unit coupled to it, the intensity of the received signal is measured and position of the beam is recorded. The measured intensity of the received signal is displayed in the form of luminescence intensity of the display screen and by analyzing the distribution of the luminescence intensity, presence or absence of metallic or non-metallic objects is ascertained, RU 2133971 C1.

The disadvantage of this method is low contrast of the received image because this method does not allow a clear distinction between non-metallic objects and the human body due to transparency of the dielectric in the employed radiation range.

Another known method for remote inspection of a target in a monitored area comprises irradiation of this area with microwave radiation using two or more elementary emitters, recording the signal reflected from the monitored area by using one or more parallel recording channels, coherent processing of the reflected signal and displaying the data obtained as a result of such processing, see US 5557283 A.

Emitters and receivers of the electromagnetic field are placed in multiple preliminary set positions. The result of the inspection is based on the analysis of a three dimensional image resulting from a digital processing of the radiation detected in broadband.

When implementing the method, irradiation of the monitored area with microwave radiation is carried out in frequency bandwidth without correlating its width with the radial spatial resolution of the monitored area image and the recording time interval during which a coherent processing of the recorded reflected signal is possible. This leads to the following disadvantages:

- inability to use the method in case of a moving inspected object (target) because the motion of the object during recording of the reflected signal changes the position of the object relative to receiving and transmitting antennae. This violates the applicability condition for coherent processing of the recorded signal. An incoherent processing does not provide a good quality image when the trajectory of the inspected object is unknown. Accordingly, the covert inspection of the object is not possible.
- because of low resolution of the image, it cannot be analyzed to deliver quantitative information regarding the dielectric permittivity of the objects (components of the target) and their equivalent mass.

There is a known method for remote inspection of a target in a monitored area including irradiation of this area with microwave radiation using two or more elementary microwave emitters, recording the reflected signal from the monitored area using one or more parallel recording channels, a coherent processing of the recorded signal to obtain the maximum intensity values of the reconstructed configuration of scatterers in the monitored area in dependence on the distance from the elementary emitters to the target and displaying the information obtained as a result of such processing by constructing a microwave image in the form of several three dimensional surfaces, RU 2294549 C1.

The abovementioned technical solution was used as a prototype for the present invention.

The disadvantages of the method which served as a prototype of the present invention are as follows:

- a low intensity of the signal reflected from the air-dielectric border - about 7% of the intensity for dielectrics with dielectric permittivity ~ 3, which is typical for explosive compounds. Therefore, the signal reflected from the dielectric-human body border (~ 90% of the intensity) can significantly distort the three dimensional surface representing the physical air-dielectric border and this, in turn, leads to errors when detecting the presence of an explosive compound;

- a small range of incidence and receiving angles of the microwave radiation at which the radiation reflected from air-dielectric border can be recorded. This is due to the fact, that the surface of the dielectric is usually sufficiently smooth in comparison to the wavelength in the microwave range and scattering on the border acquires the character of specular reflection. Therefore, this method can only be effectively implemented in a narrow range of possible angles of inspection.

DISCLOSURE OF THE INVENTION

The aim of the present invention is to improve the reliability of determining the presence or absence of dielectric objects during a covert inspection as well as to expand the range of possible angles of inspection.

According to the invention, the method for remote inspection of a target in a monitored area, comprises

irradiating said area with microwave radiation using two or more elementary microwave emitters;

recording the signal reflected from the monitored area by one or more parallel recording channels;

coherent processing of the recorded signal to obtain the maximum intensity values of the reconstructed configuration of scatterers in the monitored area in dependence on the distance from the elementary emitters to the target; and

displaying the information obtained as a result of such processing by constructing a microwave image corresponding to a three dimensional surface.

In addition, a video image of the target is obtained by using two or more video cameras which are synchronized with the microwave emitters;

the resulting video image is converted to its digital form and the three dimensional video image of the target is constructed;

the three dimensional video image and the microwave image are transferred into a general system of coordinates;

the distance I in the general system of coordinates between the microwave image and the video image is determined;

at $I < I_0$, where $I_0$ is a defined threshold value of I, absence of a concealed dielectric object at the target in an amount exceeding the maximum allowable value is ascertained;

and at $I > I_0$, a further determination of the presence of cavities in the three dimensional microwave image in regions where $I > I_0$ is performed;

when the depth h of the cavity is greater than

$$h_0 = l_0 \cdot \frac{\sqrt{\varepsilon} - 1}{\sqrt{\varepsilon}},$$

where $h_0$ is the threshold value of h, $\varepsilon$ is the value of the dielectric permittivity of the sought dielectric object;

presence of the concealed dielectric object at the target is ascertained.

The applicant is not aware of any technical solutions that are identical to the claimed subject matter. This suggests that the invention complies with the requirement of novelty.

Implementation of the distinguishing features of the invention results in new important features of the claimed subject matter. First of all, distortions of the three dimensional surface representing the physical air-dielectric border are removed, which significantly decreases the possibility of an error when determining presence (or absence) of an explosive compound.

Furthermore, an additional use of a three dimensional video image significantly expands the range of possible angles of inspection, which is particularly relevant for a covert inspection.

The applicant is not aware of any sources of information which would provide any knowledge about the relationship between the distinguishing features of the present invention and the achieved technical effect. New features of the claimed subject matter outlined above demonstrate, in applicant's opinion that the subject matter of the invention complies with the requirement of non-obviousness.

BRIEF DESCRIPTION OF FIGURES

In the following, the invention is explained by a detailed description of an example without any references to figures.

BEST MODE OF CARRYING OUT THE INVENTION

To carry out remote inspection of a target in a monitored area this area is successively irradiated by microwave radiation at 14 set equidistant frequencies in the range of 8-12 GHz. The irradiation is carried out by using elementary emitters, which, in this particular example, are represented by a switched antenna array consisting of 256 elementary emitting antennas. The signal reflected from the monitored area is recorded in this example by two parallel channels including two broadband Vivaldi antennas and two receivers. From outputs of the receivers the data corresponding to the recorded signal are transferred to a computer, where coherent processing of these data is undertaken and image of the target is built in the form of one single three dimensional surface consisting of points which correspond to the maximum intensity values of the reconstructed configuration of scatterers in the monitored area in dependence on the distance from the elementary emitters to the target.

Using additionally two video cameras, in the present example SDU-415, that were spatially separated and synchronized with the microwave emitters, a video image of the target was received, which was then converted to a digital form. The three dimensional video image of the target is reconstructed using a computer and this image later as well as the microwave image are converted into general system of coordinates. The system of coordinates is set by the plane of the antenna array and an axis perpendicular to it. At this point, the distance I in the general system of coordinates between the microwave image and the video image is determined. $I_o$ - the threshold value of I, which corresponds to the maximum permissible amount of an explosive dielectric compound is set. If $I<I_o$, absence of concealed dielectric objects in an amount exceeding the maximal allowable value at the target is ascertained. If $I≥I_o$, there is further determination of the presence of cavities in the three dimensional microwave image in regions where $I>I_o$. When the depth h of the cavity is greater

$$\text{than } h_0 = l_0 \cdot \frac{\sqrt{\varepsilon}-1}{\sqrt{\varepsilon}},$$

where $h_o$ is the threshold value of the cavity depth h, $\varepsilon$ is the value of the dielectric permittivity of the sought dielectric object, presence of the concealed dielectric object at the target is ascertained. For most common explosive compounds the value of the dielectric permittivity $\varepsilon \approx 3$.

Since the three dimensional image of the air-dielectric and dielectric-human body borders are reconstructed on the basis of different physical principles (the image of the air-dielectric border is reconstructed using video data, the image of the dielectric-human body border is reconstructed using received reflected microwave signal) the distortion of the air-dielectric border by the reflected microwave signal is excluded. Therefore, the possibility of an error in determining the presence (absence) of an explosive compound is significantly decreased. Moreover, since not the microwave radiation is used for reconstructing the air-dielectric border but the video image is used instead, the surface smoothness of the dielectric plays no role and, accordingly, the range of possible angles of inspection on an object is expanded.

INDUSTRIAL APPLICABILITY

For carrying out the invention known materials and equipment are used. Therefore, in applicant's opinion, the present invention complies with the requirement of industrial applicability.

**Claims**

1. A method for remote inspection of a target in a monitored area, *the method comprising:*

   irradiating said area with microwave radiation using two or more elementary microwave emitters;
   recording the signal reflected from the monitored area by one or more parallel recording channels;
   coherent processing of the recorded signal to obtain the maximum intensity values of the reconstructed configuration of scatterers in the monitored area in dependence on the distance from the elementary emitters to the target; and
   displaying the information obtained as a result of such processing by constructing a microwave image corresponding to a three dimensional surface, *characterized in that* a video image of the target is additionally obtained by using two or more video cameras which are synchronized with the microwave emitters;
   the resulting video image is converted to its digital form and the three dimensional video image of the target is constructed;
   the three dimensional video image and the microwave image are transferred into a general system of coordinates;
   the distance I in the general system of coordinates between the microwave image and the video image is determined;
   at $I<I_o$, where $I_o$ is a defined threshold value of I, absence of a concealed dielectric object at the target in an amount exceeding the maximum allowable value is ascertained; and
   at $I>I_o$, a further determination of the presence of cavities in the three dimensional microwave image in regions where $I>I_o$ is performed;

   when the depth h of the cavity is greater than

$$h_0 = l_0 \cdot \frac{\sqrt{\varepsilon} - 1}{\sqrt{\varepsilon}}\ ,$$

where $h_0$ is the threshold value of $h$, is the value of the dielectric permittivity of the sought dielectric object;

presence of the concealed dielectric object at the target is ascertained.

$$h_0 = l_0 \cdot \frac{\sqrt{\varepsilon} - 1}{\sqrt{\varepsilon}}$$

## INTERNATIONAL SEARCH REPORT

| | International application No. |
|---|---|
| | PCT/RU 2010/000725 |

**A. CLASSIFICATION OF SUBJECT MATTER**

G01N 22/00 (2006.01); G06T 7/60 (2006.01)

According to International Patent Classification (IPC) or to both national classification and IPC

**B. FIELDS SEARCHED**

Minimum documentation searched (classification system followed by classification symbols)

G01N 22/00-22/04, 21/00, G06K 7/00, 7/10, G06T 7/00-7/60

Documentation searched other than minimum documentation to the extent that such documents are included in the fields searched

Electronic data base consulted during the international search (name of data base and, where practicable, search terms used)

PAJ, Esp@senet, PCT Online, USPTO DB, RUPTO

**C. DOCUMENTS CONSIDERED TO BE RELEVANT**

| Category* | Citation of document, with indication, where appropriate, of the relevant passages | Relevant to claim No. |
|---|---|---|
| A | RU 2294549 C1 (OBSCHESTVO S OGRANICHENNOI OTVETSTVENNOSTJU "NAUCHNO-TEKHNICHESKY TSENTR PRIKLADNOI FIZIKI") 27.02.2007, point 1 of the claims, p. 7, 8 | 1 |
| A | WO 2008/070788 A2 (KIRSEN TECHNOLOGIES CORPORATION et al.) 12.06.2008, points 1, 8 of the claims, par. 5, 21, 23, 29, 54, fig. 10 | 1 |
| A | RU 2283485 C2 (ZAKRYTOE AKTSIONERNOE OBSCHESTVO "INTELLEKTUALNYE SKANIRUJUSCHIE SISTEMY") 10.09.2006, the abstract | 1 |
| A | SU 1800333 A1 (INSTITUT PROBLEM MASHINOSTROENIYA AN USSR) 07.03.1993, the claims | 1 |
| A | US 4234844 A (NEAR FIELD TECHNOLOGY CO) 18.11.1980, the abstract | 1 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 March 2011 (28.03.2011) | 31 March 2011 (31.03.2011) |

| Name and mailing address of the ISA/ | Authorized officer |
|---|---|
| RU | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2133971 C1
- US 5557283 A
- RU 2294549 C1